# EUROPEAN PATENT SPECIFICATION

(11) **EP 0 886 390 B1**
(45) Date of publication and mention of the grant of the patent: **24.03.2004**
(21) Application number: 98111530.6
(22) Date of filing: 23.06.1998
(51) Int. Cl.: H04B 7/005, H04B 1/707

(54) **Method and system for compact multi-user serial interference cancellation with simplified generation of spread code sequence**
Verfahren und Vorrichtung zur kompakten seriellen Mehrbenutzerinterferenzunterdrückung mit vereinfachten Erzeugung von Spreizcodessequenzen
Procédé et système pour la suppression d'interférence compact serie d'utilisation multiples avec la génération simplifiée de séquence à spectre étalé

(30) Priority: 23.06.1997 JP 16607497
(43) Date of publication of application: 23.12.1998
(73) Proprietor: NEC CORPORATION, Tokyo (JP)
(72) Inventor: Suzuki, Hideto, Minato-ku, Tokyo (JP)
(74) Representative: VOSSIUS & PARTNER

(56) References cited:
- EP-A- 0 813 314
- YING LI ET AL: "SERIAL INTERFERENCE CANCELLATION METHOD FOR CDMA" ELECTRONICS LETTERS, IEE STEVENAGE, GB, vol. 30, no. 19, 15 September 1994 (1994-09-15), pages 1581-1583, XP000466453 ISSN: 0013-5194

## Description

The present invention relates to a system for reducing interference inside a mobile communication cell of a DS-CDMA system, and particularly to a DS-CDMA Multi-user serial interference canceller system.

In the mobile communication of the DS-CDMA (Direct-Spread Modulation Code Division Multiple access)system, use of a multi-user serial interference canceller is proposed as a method of reducing interference inside a cell. This is a method wherein, prior to demodulating the signal received from a certain user k (1 ≦ k ≦ K where K represents a number of users to be processed by said system), the received signal component (hereinafter referred to as an interference replica since it works as an interference component) of a user other than the user k is reproduced and composed and an effect of the interference from the other user's signal component is reduced by implementing the processing N times (multi-stage) wherein the interference replica is deducted from the received signal and the received signal component of the user is demodulated.

Generation of despread code used in decoding the receiving signal, particularly in despreading the spread spectrum signal is activated by giving an initial value to a shift register (shift register of feed back type where a tap is set up so as to generate a desired code sequence) for sequence generation which is located inside a despread code generation section by a control section. At this time, the control section calculates an initial value of the despread code sequence from the time information, etc. indicated by the user's user number, frame number, slot number, etc. and sets up the initial value in the despread code generation section at an initial setting time (for example, at a communication start time). Once the control section sets up the initial value in the first place, the despread code generation section continues to generate despread codes of the same sequence. At a preliminary processing stage and an interference cancel stage, generation of codes for despreading is made by this method.

After that, the received signal is cut-out for each processing unit time , packet-arranged and input to the interference cancel stage. A block of the received signal packet-arranged for each processing unit time of interference cancel is referred to as a '"cancel block" At the interference cancel stage too, it is necessary to generate time series-wise the despread code sequence identically corresponding to each processed user (user aimed for the interference cancel processing).

It is therefore an object of the present invention to provide a multi-user serial interference canceller system which is compact and capable of simplifying processes in generating DS - CDMA multi-user serial interference cancellation, particularly the despread code sequence and a method thereof.

Other objects of the present invention will become clear as the description proceeds.

On describing the gist of the present invention, it is readily understood that a multi-user serial interference canceller system comprises receiving circuits for preliminary processing having a plurality of DS-CDMA receiver units for preliminary processing corresponding to each user and interference canceller circuits having a plurality of interference canceller units for successively implementing interference cancel processing in a given order. It is also readily understood that said receiving circuits for preliminary processing cut-out received DS-CDMA signals for each processing unit time of interference cancel to output as a cancel block and generate as data the parameter values corresponding to users to be set up for successively implementing interference cancel processing by said interference canceller units and output as a received signal block those parameters corresponding to each user attached to received signals for each said cancel block unit as additive information and that said each interference canceller unit of said interference canceller circuits is supplied with said received signal block and sets up parameter values corresponding to users to be processed by said interference canceller units from among parameters described as the additive information and implements interference cancel processing.

According to an aspect of the present invention, there is provided a multi-user serial interference canceller system of the type described further comprising: additive information generating means in said receiving circuits for preliminary processing and setting means in said each interference canceller unit of said interference canceller circuits; said additive information generating means generating a head value for each said processing unit time of a despread code sequence for each user as the additive information; and said setting means being supplied with said received signal block and reading out a head value corresponding to the user to be processed by said canceller unit from among said head values described for each user as the additive information and setting the head value as an initial value of the despread code sequence in order to despread said cancel block.

The additive information generating means may further include a receiver unit additive information generating means provided for each said DS-CDMA receiver unit, said receiver unit additive information generating means comprising: a despread code sequence generation section for generating a despread code to despread DS-CDMA modulated signals; a reading section for reading said despread code synchronized with a timing signal; and a timing control section for supplying the timing signal to said reading section for each start time of said processing unit time.

According to another aspect of the present invention, there is provided a multi-user serial interference cancellation method comprising the steps of: a reception preliminary processing step for implementing preliminary processing corresponding to each of plural users by receiving DS-CDMA signals; an interference canceling step for successively implementing a plurality of interference cancellation processes in a predetermined order; said reception preliminary processing step further comprises the steps of: producing a cancel block signal by slicing the received DS-CDMA signals for each processing unit time of interference cancel;
generating a head value per each said processing unit time of the despread code sequence for each user; and outputting said head value generated for each user attached to said cancel block signal as the additive information; said interference canceling step further comprises the step of: setting up a head value corresponding to a user who is subjected to said interference canceling as an initial value of the despread code sequence of the user.
Fig. 1 is a block diagram for illustrating a conventional multi-user aerial interference canceller system;
Fig. 2A is a timing chart to describe the point at issue in the conventional multi-user serial interference canceller system illustrated in Fig. 1, which is for showing a time-wise relation between an initial value calculation start timing in the preliminary processing stage and a processing unit time wherein the despread processing is implemented at first on the basis of the set up initial value;
Fig. 2B is a timing chart to describe the point at issue in the conventional multi-user serial interference canceller system illustrated in Fig. 1, which is for showing such a time chart to show the case where, in the interference cancel stage, the processed user (the despread code sequence) of the interference canceller unit is changed at a short cycle;
Fig. 3 is a block diagram for illustrating a multi-user serial interference canceller system according to a preferred embodiment of the present invention;
Fig. 4 is a block diagram to describe the constitution of the despread code generation section 19 illustrated in Fig. 3;
Fig. 5 is a view for explaining the received signal with the attached initial value of the despread code sequence of each user; and
Figs. 6A through 6D are view for explaining one example of an operation of the multi-user serial interference canceller system according to the preferred embodiment of the present invention.

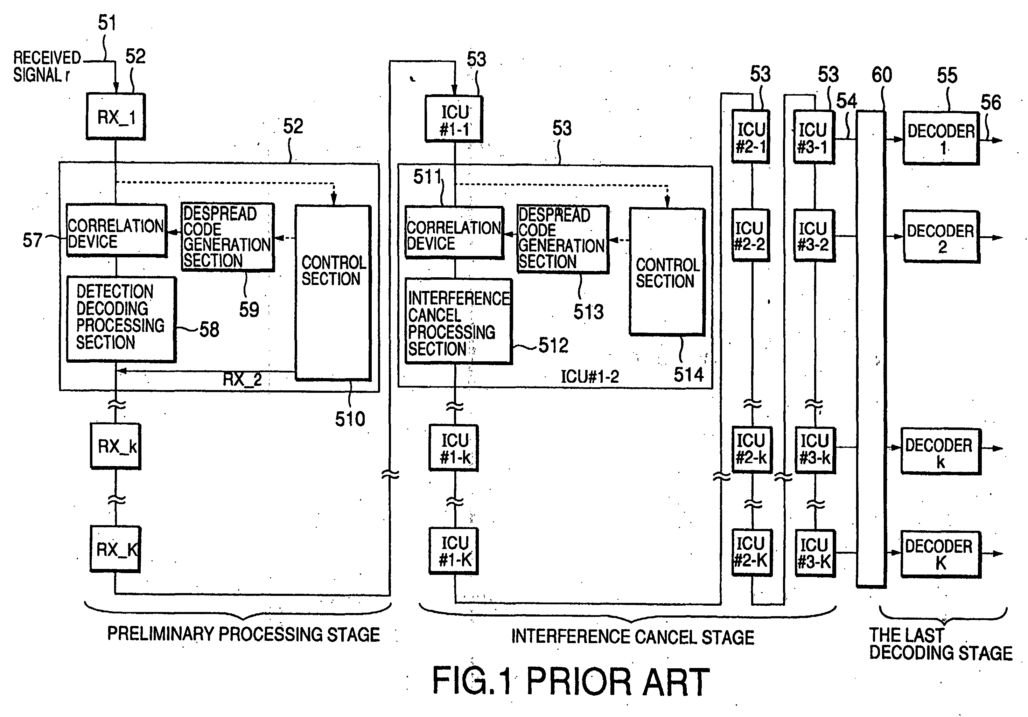

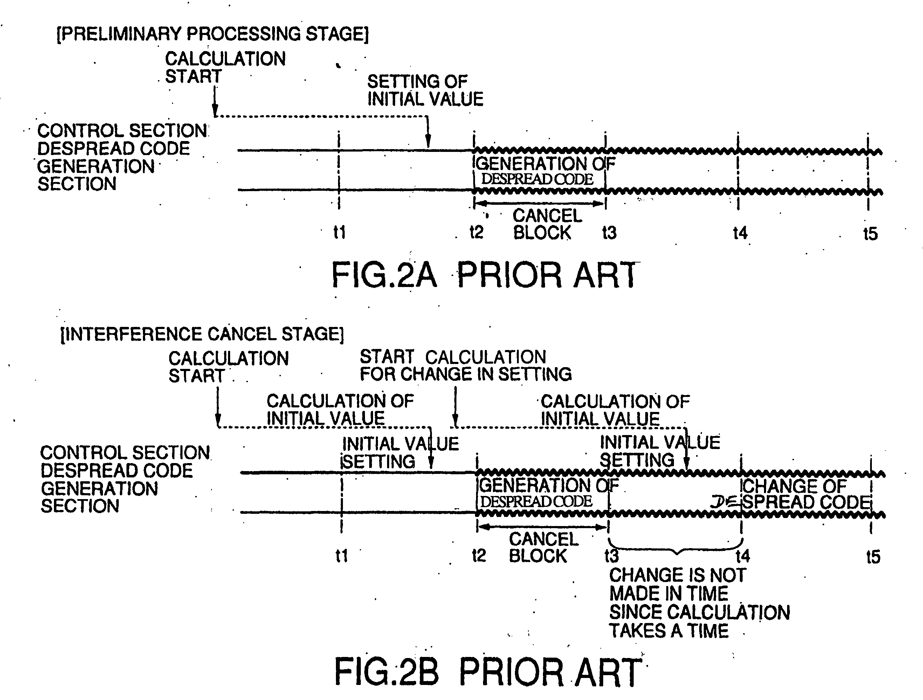

Referring to Figs. 1, 2A and 2B, description is, at first made about a conventional multi-user serial interference canceller system in order to facilitate an understanding of the present invention.

Fig. 1 is a block diagram of a conventional multi-user serial interference canceller system. The conventional multi-user serial interference canceller system comprises a receiving circuit for preliminary processing having receivers 52 for preliminary processing (RX-1 to RX-K) corresponding to the number of the users (K), a user ranking circuit (not shown), an N-stage interference canceller circuit comprising an interference canceller circuit consisting of K interference canceller units 53 (ICU #n-1 ∼ #n-k) further connected by N stages (n=1,2,...N, 3 stages as shown in the example), and a last decoder 55 connected to the interference canceller circuit of the last stage via a switch circuit 60.

As illustrated in Fig. 1, the receiver 52 for preliminary processing (hereinafter referred to as the receiver) comprises a control section 510, a despread code generation section 59, a correlation device 57 and a detection decoding processing section 58. The control section 510 , as described above, calculates an initial value of the despread code sequence allotted to the user corresponding to said receiver at the initial setting time (for example, at a communication start time) and gives said initial value to the despread code generation section. The despread code generation section 59, as described above, is comprised of the shift register of feed back type and generates the despread code sequence corresponding to the user from the initial value input from the control section 310. The correlation device 57 computes a correlation between the received signal and the despread code of the user and extracts the primary modulated wave. The detection decoding processing section 58 detects a signal level of the detection output of the correlation device 57 and implement a necessary processing for processing other circuits.

The signal level information of the receiving component for each cancel block generated by each receiver RX-1 ∼ RX-K is compared by the user ranking circuit and the K users are ranked according to signal level hight. As a result, in the preliminary processing stage for each one cancel block unit (usually for each one slot unit), a packet-arranged received signal r is added with parameters (hereinafter, referred to as initial parameters) necessary for calculation of the initial value of the despread code sequence in the interference cancel processing stage such as said cancel block number (the time information indicated by the slot number and the frame number to which the slot belongs in the case that the processing unit time of interference cancel is one slot), each user number, an initial value at the initial setting time (hereinafter, referred to as the initial value) of the despread code sequence corresponding to the user, etc. as well as the ranking of the users and it is transmitted. As described later, the interference cancel processing is implemented according to a ranking order (that is to say, starting from the user with the highest signal level)

As illustrated in Fig. 1, the interference canceller unit ICU (#i-j) 53 of the first stage comprises a control section 514, a despread code generation section 513 and an interference cancel processing section 512, and generates an interference replica of the user of the j-th ranking allotted to said ICU (#i-j).

The control section 614 reads out the cancel block number, the user number, the ranking information of the user and the initial value of the initial setting time which were transmitted along with the cancel block input to said ICU, recognizes the user of the j-th ranking allotted to the aforesaid ICU (#i-j) and, on the basis of an initial value of the initial setting time (hereinafter, referred to as the first initial value) of the despread code sequence corresponding to the user and the cancel block number, calculates the initial value of the despread code sequence for said cancel block.

When an initial value of the despread code sequence is input from the control section 514, the despread code generation section 513 generates said despread code sequence starting from the initial value. The correlation device 511 calculates a correlation between a subtracted output signal rm-(Si1 + Si2 + ..Si(j-1)) which is output from the immediate ICU (#i - (j-1)) and the despread code sequence which is output from the despread code generation section 513. Here, rm is the m-th cancel block of the received signal r and Si k is an interference replica generated by an ICU (# i.k). Accordingly, the signal rm (S i1 + Si 2 +.. Si(j-1) ) is the signal where a presumed interference by a higher ranking user is subtracted and, in this signal, the signal component of the j-th ranking user is considered to have the highest ranking signal level.

The interference cancel processing section 512 reproduces the interference replica Si j from the output of the correlation device 511 and, by subtracting said interference replica Si j from the input signal (the subtracted output signal of ICU#(i - (j-1)) (rm -(Si1+ Si2 + ..Si(j-1) ), the remainder is delivered to the next ICU #(i - (j-1) ).

In this way, the K ICUs at the first stage implement the interference cancel processing in consecutive order and according to high ranking signal level order.

This multi-stage interference canceller circuit operates as follows. First, when a ICU#1 -1 for the processing of the first ranking user of the first stage receives the received signal rm, an interference replica Sij is generated and output by the above operation and the subtracted output signal rm - Sij is delivered to a ICU#1 - 2. In the same manner, when the next ICU#1 - 2 receives a subtracted output signal rm - Si_j, not only the interference replica S12 is generated, but also a subtracted output signal rm - S 11 - S 12 is generated and delivered to a ICU#1 - 3 for the processing of the third ranking user. When, by implementing this consecutive processing , the interference cancel processing of the K ICUs of the first stage ends, K interference replica S 11, S 12, S 13, S1k are generated by the interference canceller circuit of the first stage.

The processing by the interference canceller circuit of the second stage is basically implemented in the same manner. At this time, the received signal rm delayed by the time elapsed for the interference cancel treatment of the first stage, a subtracted signal rm - (S12 + S13...+S1k) generated by the interference replica of the preceding stage and the initial value parameters corresponding to the user of the first rank determined by a receiving circuit for preliminary processing are input to a ICU#2 - 1 by a delay circuit not shown. The ICU#2 - 1 generates an interference replica S21 based on this subtracted signal and the initial value parameters and outputs the subtracted output signal rm - (S21 + S13 +...+S1k). Similarly, when a ICU#2 - 2 receives the subtracted output signal rm -(S21 + S13 +...+S1k) and the initial value parameters corresponding to the user of the second rank, an interference replica S22 is generated and the subtracted output signal rm - (S21 + S22 + S14 +...+S1k) is output to the next ICU#2 3. Since the interference cancel processing is implemented for all the receiving signals excluding the interference replica in this way, the more stages are added, the more influence of the interference by other user's signal component can be removed.

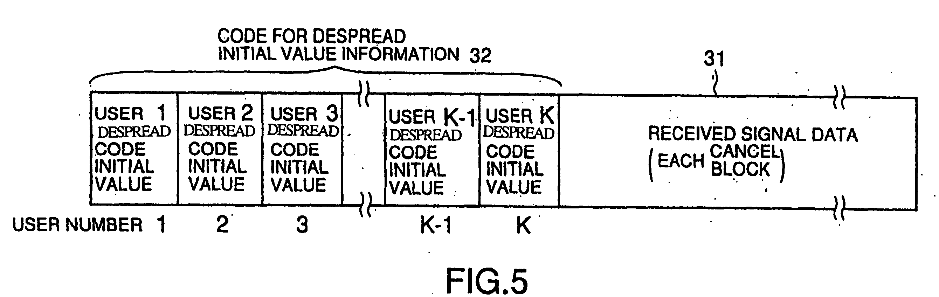

Note that the number 1, 2 ...k..... K of the decoder 55 in Fig.5 are users' numbers. Therefore, among ICU#3 -1, ICU#3 -2.....ICU#3 -k ICU#3-K of the last stage, the output of the ICU which implemented the interference cancel processing of the user 1 is connected to the decoder "1" and the output of the ICU which implemented the interference cancel processing of the user 2 is connected to the decoder "2". The connection thereof is made by a switch circuit 60.

In the above multi-user aerial interference canceller, each ICU of each stage does not implement the interference cancel processing of the same user, but implements the cancel block processing of each user with a fixed rank. For example, the interference cancel unit ICU#1 - 2 of the first stage processes the received signal component of the second rank. Accordingly, when a signal level of the signal component of each user in the received signal changes with time, the same ICU is to process the received signal component of another processed user.

Also, as described above, since the interference cancel processing of each stage is implemented time-wise according to the ranking order of the received signal components , the time series of the received signal components per processing unit time is not identical with the time order in which these components receive the interference cancel processing. For example, when the processing time (processing unit time) of the cancel block is represented by one slot and receiving signal components of the user B in the time series 1, 2, 3 of the slot are represented by B1, B2, B3, these received signal components receive the interference cancel processing by the same ICU and in the same order as the time series ,if the ranking of the time series B1, B2, B3 of these, received signal components does not change. For example, however, when the rank of B1 and B2 is 5 and the rank of B3 is 1, B1 receives the interference cancel processing by ICU#1 - 5 by 4 slots after B3. On the other hand, since B3 is the signal components of the first rank contained in the cancel block by 2 slots after B1, it receives the interference cancel processing by the same ICU#1 - 1 with A1 by 2 slots behind from A1. As a result, B3 is to receive the interference cancel processing 2 slots before B1 in spite of it being the signal contained in the cancel block 2 slots after B1. Similarly, B3 receives the interference cancel processing 3 slots before B2.

Thus, with its operation principle, the multi-user serial interference canceller system does not necessarily implement processing of the same user for a infinite time by the same unit. Also there exists a possibility that the time series wherein the received signal component of the same processed user receives the interference cancel processing is replaced. Therefore, it is necessary to make the despread code sequence changeable for each fixed time interval, that is to say, for each processing unit time.

According to the conventional interference cancel method, even in the unit of the interference cancel stage using the same method as the preliminary processing stage, there is a method adapted wherein the initial value for despreading said cancel block is calculated on the basis of the initial value set up at the first setting time in the control section and this initial value is given to the despread code generation section. However, according to this method, it is necessary to make the calculation every time there is a change in the despread code sequence (a change in the processed users). As a result, if the sequence of the despread code is changed at a short cycle, the calculation at the control section is not made in time. Particularly, if a processing unit time is cut short or frequent changes in the sequence are implemented, the processing can not be carried out in time due to the limit of the calculation time by the control section and it becomes very difficult to perform accurate despreading.

Furthermore, even if the initial value of the despread code sequence is calculated in advance for each cancel stage in the control section of the preliminary processing stage, if the calculation is made by software, the calculation time similarly becomes a bottle-neck and the processing at a short time interval becomes impossible.

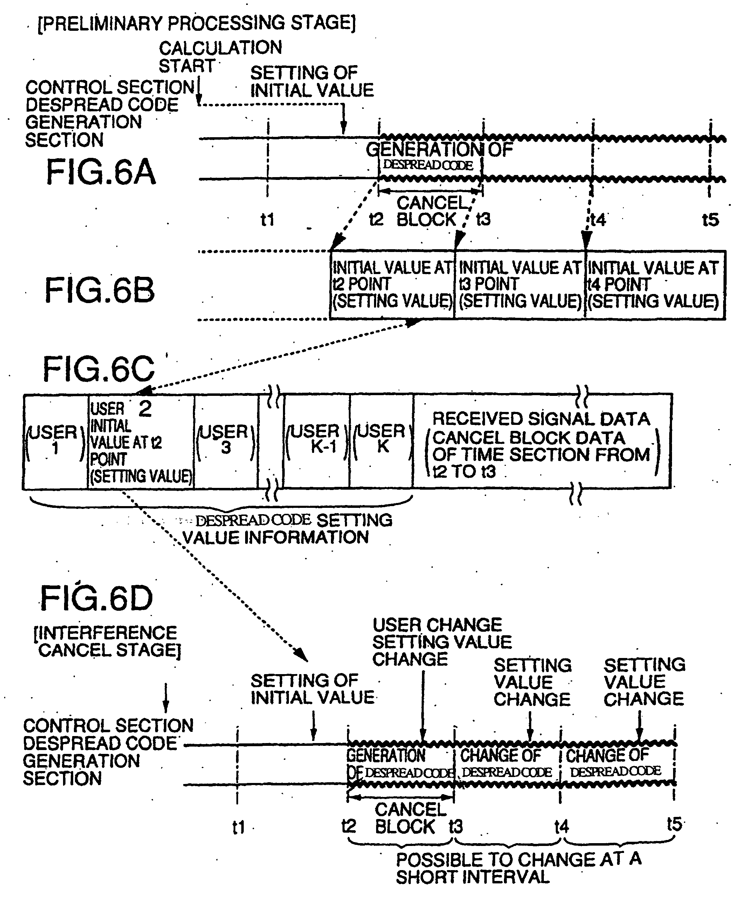

Figs. 2A and 2B, are time charts to describe the point at issue for the system of the above conventional example. Fig. 2A shows a time relation between an initial value calculation start timing at the preliminary processing stage and a processing unit time wherein the despread processing is implemented at first on the basis of the set up initial value while Fig. 2B is a time chart to show the case where the processed user(the despread code sequence) of the interference canceller unit is changed at a short cycle at the interference cancel stage. In Figs. 2A and 2B, times (t1,t2) (t2, t3), (t3, t4) are one slot of the communication time, respectively and, in the time chart, one slot is set up as one processing unit time of the interference cancel processing. Accordingly, the received signal block received during one slot is represented by one cancel block. Also, in the time chart illustrated in Fig. 2A, an initial value of the despread code sequence to despread the cancel block of the slot (t2, t3) is set up at the slot (t1,t2) previous to said slot. The reason is that usually when an initial value is generated in the shift register to generate the despread code sequence, it is difficult hardware-wise to generate the initial value at the same time the initial value is set up. Therefore, the initial value is set up at the previous stage so that it can be generated by a timing signal synchronized with said slot. This can also be said in Figs. 6A through 6D which will be described later.

In the multi-user serial interference cancel system, the receivers for preliminary processing k (k = 1, 2, ...K) correspond to the users, respectively. Accordingly, in the receiver for preliminary processing in the time chart illustrated in Fig. 2A, there is no change made in the despread code sequence. Hence, the same unit can be used indefinitely.

When the control section calculates an initial value of the despread code sequence corresponding to the user from initial parameters (the user number, the frame number and the time information such as the slot number) and the calculated initial value is set up at the slot (t1, t2), the receiver generates the despread code sequence from the next slot (t2, t3) of the setting time on the basis of the initial value. After that, the control section is not required to calculate the initial value as long as communication continues.

However, since the conventional interference canceller unit does not correspond to the user, but corresponds to the rank of the received signal for each user, when a signal level changes and the processed user is changed, an initial value of the despread code sequence has to be recalculated. In the time chart of Fig. 2B, immediately after an initial value is set up at the slot (t1, t2) and when the processed user is changed, the control section starts calculating an initial value of the despread code sequence corresponding to a new processing user. However, since the calculation takes some time, as shown in the time chart of Fig 2B, a change in the despread code sequence is not made in time for the interference cancel processing at the slot (t2, t3) and the interference cancel processing is made on and after the slot (t4, t5) by a new despread code sequence. As a result, it is shown in the time chart of Fig. 2B that the despread processing of the cancel block of the slot (t2, t3) is implemented by the despread code sequence not changed previously.

Now, description will proceed to a multi-user serial interference canceller system and a method according to the present invention.

The multi-user serial interference canceller system of the present invention has a receiver circuit for preliminary processing having a plurality of DS-CDMA receiver units for preliminary processing corresponding to each user of the decoding object and an interference canceller circuit having a plurality of the interference canceller units to implement the interference cancel processing successively in a given order. The receiving circuit for preliminary processing cuts-out the DS-CDMA signal for each processing unit time of the interference cancel, outputs it as the cancel block and, at the same time, generates as data each parameter corresponding to the user which has to be set up so that said interference canceller unit implements the interference cancel processing successively and outputs as a received signal block those parameters corresponding to the users added with the receiving signal of said cancel block as additive information. Each interference canceller unit of said interference canceller circuit receives said received signal block and forms a multi-user serial interference canceller system wherein ,from among the parameters described as the additive information, the parameter corresponding to the user to be processed by said interference cancel unit is set up and the interference cancel processing is implemented. The receiving circuit for preliminary processing has an additive information generating means for generating a.head value for each said processing unit time of the despread code sequence as additive information. Each interference canceller unit of the interference canceller circuit receives said received signal block, reads out from among said head values described for each user as an additive information the head value corresponding to the user to be processed by said canceller unit and has a setting means for setting the head value as an initial value of the despread code sequence corresponding to the user to despread said cancel block

The additive information generation section contains a receiving unit additive information generating means which is set up for each said DS-CDMA receiving unit. The receiving unit additive information generating means has a despread code sequence generation section for despreading DS-CDMA modulated signals, a reading section for reading said despread code synchronized with the timing signal and a timing control section for supplying the timing signal to said reading section for each start time of said processing unit time.

The multi-user serial interference cancel method of the present invention is a multi-user serial interference cancel method comprising a receiving preliminary processing step for implementing a preliminary processing corresponding to a plurality of users of the decoding object by receiving DS-CDMA signals and an interference cancel step for implementing a plurality of interference cancel processings successively in a given order, wherein ,in the receiving preliminary processing step, the received DS-CDMA signal is cut-out for each processing unit time of the interference cancel and the head value generated for each of the users is added to said cancel block signal as additive information and output, while in the interference cancel step, from among the head values described as additive information, the head value corresponding to the user of the interference cancel processing object is set up as an initial value of the despread code sequence of the user and the interference cancel processing is implemented.

The initial setting value of the despread code required for the head of each cancel block is added to the cancel block in advance in the preliminary processing step, in each unit of the interference cancel step, from among the added initial values of each user, an arbitrary one is chosen and, by merely setting up the chosen initial value in the interference cancel unit, a code sufficient for the processing unit time can be generated. Thus, the interference cancel unit processing is simplified and can correspond to a change in the despread code sequence at a short cycle.

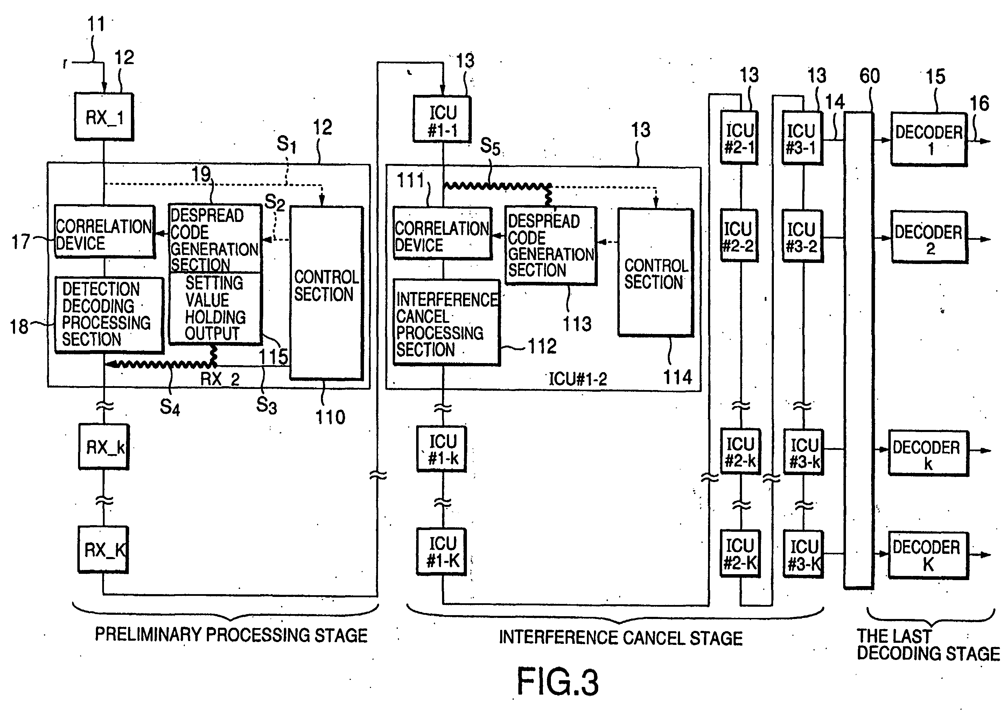

Next, referring to Figs. 3, 4, 5, and 6A through 6D, description proceeds to a multi-user serial interference canceller system and a method according to a preferred embodiment of the present invention.

Fig. 3 is a block diagram of one embodiment of the multi-user serial interference canceller system of the present invention.

As illustrated in Fig. 3, the multi-user serial interference canceller system of the present embodiment comprises a receiving circuit for preliminary processing having receivers 12 for preliminary processing (RX- 1 ∼ RX - K) for the number of the users (K pieces), N stages of an interference canceller circuit connected with further N stages (n = 1, 2, N, 3 stages in the example shown) of the interference canceller circuit consisting of K interference canceller units 13 (ICU#n - 1 ∼#n - k) and a last decoder 15 connected with the interference canceller circuit of the last stage via a switch circuit 60.

The receiver 12 for preliminary processing 12 (hereinafter referred to as the receiver) is furnished with a control section 110, a despread code generation section 19, a correlation device 17, and a detection decoding processing section 18. The control section 110 calculates the first initial value of the despread code sequence corresponding to each receiver (each user) at the control section 110 by using information S1 such as the user's user number (the despread code sequence is specified by the user number) or frame number, slot number, etc. to be decoded (which give the time information unitizing the transmitting time of signals of the frame unit or the slot unit, therefore, these numbers can be used as the time information for deciding from which point of time the despread code sequence should be generated.) and the result thereof is set up in the despread code generation section 19. The present preferred embodiment implements the interference cancel processing by choosing the received signal of one slot as a processing unit. Hence, one cancel block is equivalent to the received signal of one slot.

The despread code generation section 19 generates a despread code sequence from an initial value set up by synchronizing with a timing signal to be described later. The correlation device 17 extracts the primary modulated wave by computing a correlation between the received signal and the despread code of the user. The detection decoding processing section 18 receives the detected output from the correlation device 17 and implements the processing necessary for the given processing of other circuits (for example, when a parameter necessary for the interference cancel processing of the interference canceller circuit depends on the result of the correlating detection processing, the very parameter is generated).

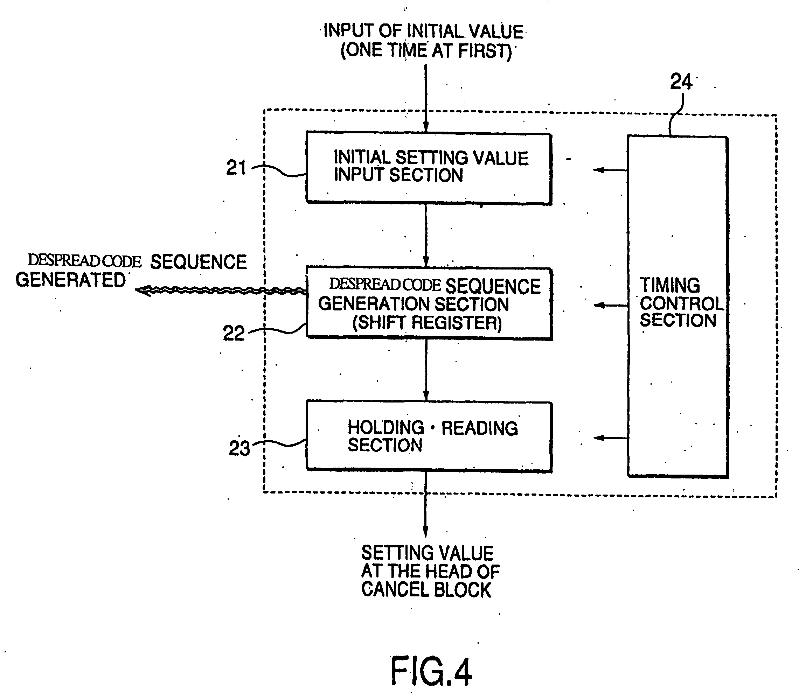

Fig. 4 is a block diagram to show the constitution of one embodiment of the despread code generation section 19 of the receiver in the interference canceller system of the present preferred embodiment.

As illustrated in Fig. 4, the despread code generation section 19 of the present embodiment is furnished with an initial setting value input section 21, a despread code sequence generation section 22 , a holding · reading section 23 and a timing control section 24.

The initial setting value input section 21 receives an initial value of the despread code sequence for despreading an input cancel block from the control section 110 and sets up said initial value in the despread code sequence generation section 22. The despread code sequence generation section 22 is comprised of a shift register (for example, a shift register of feed back type wherein a tap is set up so as to generate M sequences of a certain type). The timing control section 24 supplies a timing for generating the despread code in the despread code sequence generation section 22 and, at the same time, outputs a timing signal to the holding reading section 23 to be described later. The holding reading section 23 reads out and holds a shift register value in the despread code sequence generation section 22 by synchronizing with the timing signal received from the timing control section 24 and outputs it to a setting value holding output section 115 to be described later.

The setting value holding output section 115 receives the shift register value for each processing unit time from the holding · reading section 23 and works as an interface to hold and output it.

In this manner, the setting value computed by the Control section 110 is set up in the despread code sequence generation section 22 through the initial setting value input section 21. After that, by receiving a clock for generating the despread code from the despread code sequence generation section 22, the shift register starts rotating inside the despread code sequence generation section 22 and the despread code starts generating. The shift register value is read out for each processing unit time and output from said receiver via the setting value holding output section 115.

The initial value of the despread code sequence generated by each receiver for despreading the receiving signal of the cancel block unit is added to the aforesaid cancel block and output from the receiving circuit for preliminary processing. In Fig. 3, the signal S3 is the first initial value corresponding to the first cancel block. The signal S4 is the initial setting value corresponding to the cancel block received after the next slot.

Next, description is made as regards an operation of the multi-user serial interference canceller system and the method according to the above-mentioned preferred embodiment of the present invention.

In the receiving stage for preliminary processing, since the users processed by the receivers (RX - 1 ∼ RX - K) are fixed, an initial value of the despread code sequence is set up once in the beginning and a sequence is generated. After communication starts, in principle there is no change in the users during communication and because there is no change in the middle of the despread code sequence setting, the same sequence continues to be generated thereafter.

The timing control section 24, while outputting the timing signal for generating the despread code sequence supplies the control signal to the holding · reading section 23 each time the processing unit time (the processing time of one cancel block) starts. Also synchronized with a timing of the control signal, the value of the shift register of the above despread code sequence generation section 22 is taken in and held at the holding · reading section 23. The initial value of said despread code sequence for each cancel block held at the holding · reading section 23 is read out by the setting value holding output section 115 (interface) and ,by being added to the corresponding received signal cancel block, it is transmitted.

Fig. 5 shows the received signal block wherein an initial value information 32 of the despread code sequences of K users is added to received signal data 31 of the cancel block units. After being added with the initial value of the despread code sequences corresponding to all the users from RX- 1 to RX - K, the received signal block is input to an interference cancel stage unit.

As illustrated in Fig. 3, in the interference cancel stage unit 13, an arbitrary initial value is chosen from among the initial values of each user added to each of the above received signal cancel blocks and the chosen initial value is set up in the despread code generation section. In this case, the judgment basics as to which initial value corresponding to the user should be chosen are separately decided (which user at which point of time a certain ICU unit should process is decided by a separate judgment ).

Figs. 6A through 6D are explanatary views of one example of the operation of the multi-user serial interference canceller system and the method according to the preferred embodiment of the present invention.

In the preliminary processing stage, when the control section 110 of each receiver sets up the first initial value in the slot (t1, t2), the despread code generation section 19 generates the despread code sequence from the set up initial value from the head time t2 of the next slot, while in the head time t3, t4, t5 ..... of the succeeding slot, the despread code at that time is output as an initial value of the second, third, forth ... point of time (see Fig. 6A, 6B). Its the initial value corresponds to each user (receiver) in the head time t2 of the cancel block received in the slot (t2, t3) and said slot, a received signal block like in Fig. 6C is generated. When any ICU unit receives the received signal block and the processing of the user 2 is decided to be implemented on a given judgment basis, the despread code initial value of the user 2 described in the received signal block is taken out and set up in the despread code generation section of the ICU. In this case, similar to the conventional method, since the control section 514 is not required to calculate an initial value for each change of the processed user, an initial value taken out from the received signal block can be set up in the despread code generation section 113 (see the signal S5 of Fig. 3). Accordingly, as shown in Fig. 6D, the despread code sequence wherein the initial value from the next slot of the setting time is treated as a head code can be generated.

As described above, the present invention has the following two advantageous effects.

First, in the preliminary processing stage, since the initial setting value of the despread code in each cancel block head is not required to be calculated for each cancel block, a load of the control section can be reduced. Also since the generation of the initial setting value for each cancel block is realized by merely holding (ratcheting ) the despread code generated by hardware with a timing of the cancel block head, there is scarcely any restriction imposed on the time arrangement of the cancel block by the generation of the initial value.

Second, in each unit of the interference cancel stage, an arbitrary initial value is chosen from among the initial values of each user attached to the cancel block by a given judgment and since, by merely setting an initial value in the despread code generation section, a code for the processing unit time can be generated, the processing of the control section inside the ICU is simplified and the calculation time is not required so that there is no restriction imposed on the time arrangement of the cancel block. As a result, realization of the system becomes quite easy.

While this invention has thus far been described in conjunction with a preferred embodiment thereof, it will now be readily possible for those skilled in the art to put this invention into practice in various other manners in accordance with the appended claims.

## Claims

1. A multi-user serial interference canceller system comprising:
receiving circuits for preliminary processing having a plurality of DS-CDMA receiver units for preliminary processing corresponding to each user;
interference canceller circuits having a plurality of interference canceller units for successively implementing interference cancel processing in a given order,
said receiving circuits for preliminary processing cutting-out received DS-CDMA signals for each processing unit time of interference cancel to output as a cancel block and generate as data the parameter values corresponding to users to be set up for successively implementing interference cancel processing by said interference canceller units and output as a received signal block those parameters corresponding to each user attached to received signals for each said cancel block unit as additive information;
said each interference canceller unit of said interference canceller circuits being supplied with said received signal block and setting up parameter values corresponding to users to be processed by said interference canceller units from among parameters described as the additive information and implements interference cancel processing; **characterized in that**
said receiving circuits for preliminary processing have additive information generating means for generating a head value for each said processing unit time of a despread code sequence for each user as the additive information; and that
said each interference canceller unit of said interference canceller circuits has setting means which is supplied with said received signal block and reads out a head value corresponding to the user to be processed by said canceller unit from among said head values described for each user as the additive information and which sets the head value as an initial value of the despread code sequence in order to despread said cancel block.

2. A multi-user serial interference canceller system as claimed in claim 1, **characterized in that** said additive information generating means further include a receiver unit additive information generating means provided for each said DS-DCMA receiver unit, said receiver unit additive information generating means comprising:
a despread code sequence generation section for generating a despread code to despread DS-CDMA modulated signals;
a reading section for reading said despread code synchronized with a timing signal; and
a timing control section for supplying the timing signal to said reading section for each start time of said processing unit time.

3. A multi-user serial interference cancellation method comprising the steps of:
a reception preliminary processing step for implementing preliminary processing corresponding to each of plural users by receiving DS-CDMA signals;
an interference canceling step for successively implementing a plurality of interference cancellation processes in a predetermined order; **characterized in that**
said reception preliminary processing step further comprises the steps of:
producing a cancel block signal by slicing the received DS-CDMA signals for each processing unit time of interference cancel;
generating a head value per each said processing unit time of the despread code sequence for each user; and
outputting said head value generated for each user with attached to said cancel block signal as additive information;
said interference canceling step further comprises the step of:
setting up a head value corresponding to a user who is subjected to said interference canceling as an initial value of the despread code sequence of the user.

## Patentansprüche

1. Serielles Mehrbenutzer-Interferenzunterdrückungssystem mit:
Empfangsschaltungen zur Vorverarbeitung mit mehreren DS-CDMA-Empfängereinheiten zur Vorverarbeitung in Entsprechung zu jedem Benutzer;
Interferenzunterdrückungsschaltungen mit mehreren Interferenzunterdrückungseinheiten zum aufeinanderfolgenden Durchführen einer Interferenzunterdrückungsverarbeitung in einer vorgegebenen Reihenfolge,
wobei die Empfangsschaltungen zur Vorverarbeitung DS-CDMA-Empfangssignale für jede Verarbeitungszeiteinheit der Interferenzunterdrückung ausschneiden, um die Parameterwerte in Entsprechung zu Benutzern als Unterdrückungsblock ausgeben und als Daten erzeugen, die zur aufeinanderfolgenden Durchführung der Interferenzunterdrückungsverarbeitung durch die Interferenzunterdrückungseinheiten einzustellen sind, und als Empfangssignalblock jene Parameter in Entsprechung zu jedem Benutzer ausgeben, die Empfangssignalen für jede Unterdrückungsblockeinheit als Zusatzinformationen beigefügt sind;
wobei jede Interferenzunterdrückungseinheit der Interferenzunterdrückungsschaltungen den Empfangssignalblock erhält und Parameterwerte in Entsprechung zu Benutzern, die durch die Interferenzunterdrückungseinheiten zu verarbeiten sind, aus Parametern einstellt, die als Zusatzinformationen beschrieben sind, und die Interferenzunterdrückungsverarbeitung durchführt; **dadurch gekennzeichnet, daß**
die Empfangsschaltungen zur Vorverarbeitung eine Zusatzinformations-Erzeugungseinrichtung zum Erzeugen eines Kopfwerts für jede Verarbeitungszeiteinheit einer Entspreizcodesequenz für jeden Benutzer als Zusatzinformationen haben; und daß
jede Interferenzunterdrückungseinheit der Interferenzunterdrückungsschaltungen eine Einstelleinrichtung hat, die den Empfangssignalblock erhält und einen Kopfwert in Entsprechung zu dem durch die Unterdrückungseinheit zu verarbeitenden Benutzer aus den Kopfwerten ausliest, die für jeden Benutzer als Zusatzinformationen beschrieben sind, und die den Kopfwert als Anfangswert der Entspreizcodesequenz einstellt, um den Unterdrückungsblock zu entspreizen.

2. Serielles Mehrbenutzer-Interferenzunterdrückungssystem nach Anspruch 1, **dadurch gekennzeichnet, daß** die Zusatzinformations-Erzeugungseinrichtung ferner eine Empfängereinheit-Zusatzinformations-Erzeugungseinrichtung aufweist, die für jede DS-CDMA-Empfängereinheit vorgesehen ist, wobei die Empfängereinheit-Zusatzinformations-Erzeugungseinrichtung aufweist:
einen Entspreizcodesequenz-Erzeugungsabschnitt zum Erzeugen eines Entspreizcodes, um DS-CDMA-modulierte Signale zu entspreizen;
einen Leseabschnitt zum Lesen des Entspreizcodes synchron zu einem Zeittaktsignal; und
einen Zeittaktsteuerabschnitt zum Zuführen des Zeittaktsignals zum Leseabschnitt für jede Startzeit der Verarbeitungszeiteinheit.

3. Serielles Mehrbenutzer-Interferenzunterdrückungsverfahren mit den folgenden Schritten:
einem Empfangsvorverarbeitungsschritt zum Durchführen einer Vorverarbeitung in Entsprechung zu jedem von mehreren Benutzern durch DS-CDMA-Empfangssignale;
einem Interferenzunterdrückungsschritt zum aufeinanderfolgenden Durchführen mehrerer Interferenzunterdrückungsabläufe in einer vorbestimmten Reihenfolge; **dadurch gekennzeichnet, daß**
der Empfangsvorverarbeitungsschritt ferner folgende Schritte aufweist:
Erzeugen eines Unterdrückungsblocksignals durch Zeitscheibenaufteilen der DS-CDMA-Empfangssignale für jede Verarbeitungszeiteinheit der Interferenzunterdrückung;
Erzeugen eines Kopfwerts je Verarbeitungszeiteinheit der Entspreizcodesequenz für jeden Benutzer; und
Ausgeben des für jeden Benutzer erzeugten Kopfwerts unter Beifügung an das Unterdrückungsblocksignal als Zusatzinformationen;
wobei der Interferenzunterdrückungsschritt ferner folgenden Schritt aufweist:
Einstellen eines Kopfwerts in Entsprechung zu einem Benutzer, der der Interferenzunterdrückung unterzogen wird, als Anfangswert der Entspreizcodesequenz des Benutzers.

## Revendications

1. Système d'annulation d'interférence en série multi-utilisateur comprenant :
des circuits de réception pour le traitement préliminaire comportant une pluralité d'unités de réception DS-CDMA pour le traitement préliminaire correspondant à chaque utilisateur ;
des circuits d'annulation d'interférences comportant une pluralité d'unités d'annulation d'interférences pour réaliser successivement le traitement d'annulation d'interférences dans un ordre donné,
lesdits circuits de réception pour les signaux DS-CDMA de découpage du traitement préliminaire reçus pour chaque temps d'unité de traitement d'annulation d'interférence à envoyer en tant que bloc d'annulation et pour générer, en tant que données, les valeurs des paramètres correspondant aux utilisateurs à mettre en oeuvre pour réaliser successivement le traitement d'annulation d'interférence par lesdites unités d'annulation d'interférence et envoyer, en tant que bloc de signal reçu, les paramètres correspondant à chaque utilisateur liés aux signaux reçus pour chaque unité de bloc de signal en tant qu'information supplémentaire ;
ladite chaque unité d'annulation d'interférences desdits circuits d'annulation d'interférences étant alimentée avec ledit bloc de signal reçu et mettant en oeuvre les valeurs des paramètres correspondant aux utilisateurs à traiter par lesdites unités d'annulation d'interférences parmi les paramètres décrits comme les informations supplémentaires et réalisant le traitement d'annulation d'interférences ; **caractérisé en ce que**
lesdits circuits de réception pour le traitement préliminaire comportent des moyens de production d'informations supplémentaires pour générer une valeur de tête pour chaque temps de traitement d'une séquence de code de désétalement pour chaque utilisateur en tant qu'information supplémentaire ; et **en ce que**
ladite chaque unité d'annulation d'interférences desdits circuits d'annulation d'interférences comporte un moyen de réglage qui est alimenté avec ledit bloc de signal reçu et qui lit une valeur de tête correspondant à l'utilisateur et à traiter par ladite unité d'annulation parmi lesdites valeurs de tête décrites pour chaque utilisateur en tant qu'information supplémentaire et qui ajuste la valeur de tête comme une valeur initiale de la séquence de code de désétalement afin de désétaler ledit bloc de signal.

2. Système d'annulation d'interférences en série multi-utilisateur selon la revendication 1, **caractérisé en ce que** lesdits moyens de production des informations supplémentaires comprennent en outre un moyen de production d'informations supplémentaires d'unité de réception prévu pour chaque unité de réception DS-CDMA, lesdits moyens de production d'informations supplémentaires de l'unité de réception comprenant :
une section de production d'une séquence de code de désétalement pour générer un code de désétalement pour étaler les signaux modulés DS-CDMA ;
une section de lecture pour lire ledit code de désétalement avec un signal de synchronisation ; et
une section de contrôle de synchronisation pour envoyer le signal de synchronisation dans ladite section de lecture pour chaque temps de démarrage dudit temps d'unité de traitement.

3. Procédé d'annulation d'interférences en série multi-utilisateur comprenant les étapes suivantes :
un traitement préliminaire à la réception pour réaliser un traitement préliminaire correspondant à chacun des utilisateurs en recevant des signaux DS-CDMA ;
une annulation d'interférences pour réaliser successivement une pluralité de processus d'annulation d'interférences dans un ordre prédéterminé ;
**caractérisé en ce que**
ladite étape de traitement préliminaire de réception comprend en outre les étapes suivantes :
production d'un signal de bloc d'annulation en découpant les signaux DS-CDMA reçus pour chaque temps d'unité de traitement d'annulation d'interférences ;
génération d'une valeur de tête pour chaque temps d'unité de traitement de la séquence de code de désétalement pour chaque utilisateur ; et
envoi de ladite valeur de tête générée pour chaque utilisateur, liée audit signal de bloc d'annulation en tant qu'information supplémentaire ;
ladite étape d'annulation d'interférences comprend en outre l'étape suivante :
réglage d'une valeur de tête correspondant à un utilisateur qui est soumis à ladite annulation d'interférences en tant que valeur initiale de la séquence de code de désétalement de l'utilisateur.
